# EUROPEAN PATENT APPLICATION

(11) **EP 1 122 544 A1**
(43) Date of publication of application: **08.08.2001**
(21) Application number: 99947877.9
(22) Date of filing: 13.10.1999
(51) Int. Cl.: G01N 35/02, G01N 1/28

(54) **AUTOMATIC SEPARATOR/EXTRACTOR AND CONTROL METHOD THEREFOR**

(30) Priority: 13.10.1998 JP 29115998
(71) Applicant: PRECISION SYSTEM SCIENCE CO., LTD., Matsudo-shi, Chiba, 271-0064 (JP)
(72) Inventor: TAJIMA, Hideji Precision System Science Co., Ltd., Inagi-shi Tokyo 206-0812 (JP); SAGAWA, Norihasa Hitachi Koki Co., Ltd., Hitachinaka-shi Ibaraki-ken 312-8502 (JP); SATO, Toyosaku Hitachi Koki Co., Ltd., Hitachinaka-shi Ibaraki-ken 312-8502 (JP); MORITA, Masataka Hitachi Koki Co., Ltd., Hitachinaka-shi Ibaraki-ken 312-8502 (JP); HAYASAKA, Hiroshi Hitachi Koki Co., Ltd., Hitachinaka-shi Ibaraki-ken 312-8502 (JP); SATO, Kouji Hitachi Koki Co., Ltd., Hitachinaka-shi Ibaraki-ken 312-8502 (JP); TAKAHASHI, Kahoru Hitachi Koki Co., Ltd., Hitachinaka-shi Ibaraki-ken 312-8502 (JP)
(74) Representative: Bohnenberger, Johannes, Dr.
(86) International application number: JP9905648
(87) International publication number: WO0022440

(57) **Abstract**

The invention relates to an automatic separator/extractor and a method of controlling same, with the object, particularly in all manner of fields such as medical science, agricultural science, scientific fields, or pharmaceuticals, of being able to achieve at high speed and accuracy, extraction or separation of precipitate or supernatant at a high quality, accuracy and reliability, above that which can be achieved by manual means.

The construction has; a conveying device for conveying a mounted vessel along a closed path, a dispensing section for dispensing a reagent or the like into the vessel mounted on the conveying device, a liquid processing section for removing and/or extracting liquid other than a precipitate inside the vessel mounted on the conveying device, a separator for performing separation with respect to the contents inside a vessel which is mounted on the conveying device and/or a vessel which is installed away from the conveying device, a vessel moving device for bringing in and taking out the vessel with respect to the conveying device and/or separator, and an operation/control section for performing operation and control with respect to the conveying device, the dispensing section, the liquid processing section, the vessel moving device, and the separator.

## Description

### TECHNICAL FIELD

The present invention relates to an automatic separator/extractor and a method of controlling same. Particularly, the present invention relates to an automatic separator/extractor and a method of controlling same, applicable to medical treatment, inspection, diagnosis, medical care, research, quantitative analysis, qualitative analysis and so on, which in order to perform separation, extraction or recovery of immune substances such as antibodies or antigens, genetic substances (DNA, RNA, m-RNA and so on), bacillus, and other useful substances such as medicines, or target substances, in all manner of fields such as medical science, agricultural science, scientific fields, pharmaceuticals, can perform consistently and automatically in large numbers and quickly in a vessel such as a microplate, processes or operations such as reaction, dispensation, isolation, concentration, agitation, clarification, suspension, and dilution related to this.

### BACKGROUND ART

Heretofore, for plasmid extraction or for separating and obtaining a target substance such as some other immune substance (double antibody technique) using a centrifuge, various processes are necessary. For example, in extracting plasmids, at first a process is required for collecting from a colon bacillus culture solution. Then, in order to dissolve the collected colon bacillus, a process if required for dispensing a reagent such as one with an added alkali salt or acetate. After this, a process is required which involves separating the extracted plasmid in the supernatant, then dispensing various reagents to remove the supernatant and obtain the plasmid as a precipitate.

However conventionally, in the case of performing the above processing, the precipitate obtained as a result of reaction or extraction is not always limited to a stabilized solid mass, and there are many cases where this must be handled as a turbid unstable mass. Furthermore, this is not necessarily limited to the case of liquids with low viscosity as the supernatant, and it is also necessary to be able to handle cases where the boundary between liquids with a high viscosity, or precipitates is not very clear.

Therefore, conventionally the removal and discharge of liquids from the precipitate, and the drawing and extracting of liquids, are carried out by hand. Hence this is a difficult operation involving delicate skill of the operator. For example, even if automated, performing the process for one test tube at best is normal.

In particular, in performing removal of the liquid other than the precipitate by manual means, it is necessary to place blotting paper on a desk, and upend the vessel in one movement to drain off the water. In this method, due to the act involving tapping a plate on the table in order to drain off the water, a part of the precipitate is likely to be discharged together with the water. Furthermore, there is the problem that the water adheres to the surface of the plate, so that cross contamination is likely to occur, and safety to personnel is likely to be compromised.

Therefore, the present invention is for solving the above problems, with the following objects:

Firstly, to be able to, at the time of performing supernatant extraction or extraction of a precipitate, automatically set; a fine flow speed, an incline angle of a vessel or drawing device, upper and lower stop positions of a nozzle, drawing strength and so forth, to thereby achieve at high speed and accuracy, extraction or separation of precipitate or supernatant at a high quality, accuracy and reliability, above that which can be achieved by manual means.

Secondly, to be able to automate the process so that a persons hands are not required, to thereby release complex processes from a persons hand, and perform reliable processing where cross contamination can be kept to a minimum.

Thirdly, to be able to have a comparatively simple structure to thereby achieve a reduction in manufacturing costs, and take up a minimum space by making this compact.

Fourthly, to be able to arrange the necessary equipment for all the processes so that from the beginning to end of a process, this can be achieved consistently, efficiently and quickly, thereby contributing to a reduction in running cost.

Fifthly, in particular, to be able to perform a reliable supernatant processing operation at the time when an operation is performed for a supernatant processing step where after dissolving protein, and the lipid of cells, bacteria and so forth, and putting DNA into suspension, the impurities are further precipitated, and the DNA remains in the supernatant, and at this time, the supernatant only is reliably separated from the turbid precipitate, so that there is no precipitate mixed at all.

Sixthly, to use a dispensing device which uses for example disposable tips, so that highly accurate dispensation of small amounts of liquid is possible, to thereby enable processing at a high accuracy.

Seventhly, to use a microplate having a large number of wells, and perform drawing and discharging processing in large quantities altogether, to thereby enable efficient and speedy processing of large quantities of liquid amounts, to enable correspondence of large scale simulation base sequences.

### DISCLOSURE OF THE INVENTION

In order to solve the above technical problems, a first aspect of the invention has a conveying device for conveying a mounted vessel along a closed path, a dispensing section for dispensing a reagent or the like into the vessel mounted on the conveying device, a liquid processing section for removing and/or extracting liquid other than a precipitate inside the vessel mounted on the conveying device, a separator for performing separation with respect to the contents inside a vessel which is mounted on the conveying device and/or a vessel which is installed away from the conveying device, a vessel moving device for bringing in and taking out the vessel with respect to the conveying device and/or separator, and an operation/control section for performing operation and control with respect to the conveying device, the dispensing section, the liquid processing section, the vessel moving device, and the separator.

Here "removing liquid other than the precipitate" is for obtaining precipitate with the liquid removed, while "extracting liquid other than the precipitate" is for obtaining liquid which does not contain precipitate. Furthermore regarding "a liquid processing section for removing and/or extracting liquid other than a precipitate inside the vessel mounted on the conveying device", here the vessel may be mounted on the conveying device before or after removal or extraction of the liquid, and at the time of liquid removal or extraction, this need not necessarily be mounted on the conveying device.

According to the present invention, since this has a conveying device for conveying the vessel along the closed path, the operation of removal and/or extraction of liquid other than a precipitate, and of separation can be executed with an optional number of repetitions, and in an optional sequence and combinations. Therefore complicated operations can be efficiently executed with a compact apparatus. Furthermore, dispensation, removal and/or extraction of liquid other than precipitate can be performed with respect to the vessel mounted on the conveying device. Hence the conveying position and the process position can approximately coincide, so that the amount of movement of the vessel can be reduced. Furthermore, since by means of the operation/control section, the dispensation, removal and/or extraction of the liquid, and the separation can be consistently and systematically handled, then an efficient process can be executed. Moreover, since the vessel moving device is provided, movement of the vessel is possible also between apparatus provided apart from the conveying device. Therefore the conveying device and various apparatus can be combined, giving generality.

A second aspect of the present invention is one where in the first aspect, the separator exerts a centrifugal force on a vessel containing a substance to be separated, and/or exerts a magnetic force on a vessel containing a substance to be separated which is combined with magnetic particles, to thereby perform separation.

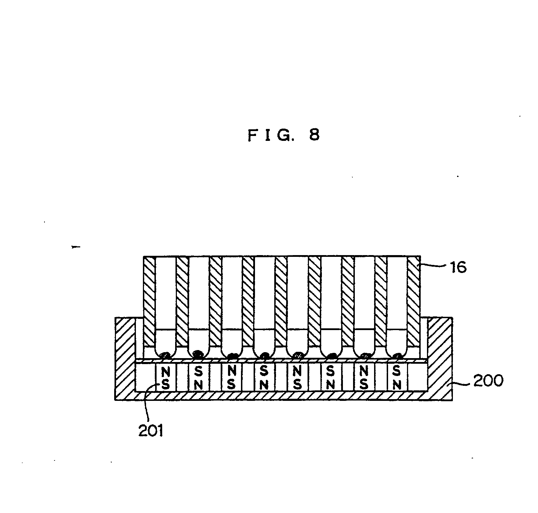

Furthermore, also in the liquid removal section other than the separator, by providing a magnetic device for exerting a magnetic force inside the vessel from the bottom of the vessel, then the object substance which has been combined with magnetic particles can be attached as precipitate to the bottom of the vessel. As a result, liquid other than the precipitate can be reliably removed or extracted, and then drawn. Here "magnetic force device" is for example a device as shown in FIG. 8 where magnets or electromagnets are arranged in a plane with the magnetic poles in reverse polarity to each other.

According to the present invention, by exerting a centrifugal force, the substances can be separated according to their density difference. Moreover, in the case where magnetic particles are used, then irrespective of the density difference, by using a differential bond strength the specific substances can be separated.

According to a third aspect of the invention, the first aspect of the invention has an agitating section for agitating the contents of the vessel mounted on the conveying device, and the agitating section is operated and controlled by the operation/control section. By performing agitating with this aspect of the invention, the dispensed reagent can be homogeneously mixed with the sample, so that the reaction can be efficiently and uniformly promoted. Here agitating may also be realized by the dispensing section by performing operations for repeating the drawing and discharging of the dispensing section.

According to a fourth aspect of the invention, in the first through third aspects of the invention, the vessel is a microplate provided with a plurality of wells, and the conveying device mounts and conveys a plurality of the vessels. With the microplate according to the present invention, a 96 hole microplate with the wells arranged as 8 x 12 is widely used as an international standard. Other than this, a microplate with 384 holes provided as 16 x 24 is also widely used. According to the present invention, since a combined process can be performed for a large quantity or large number of specimens, then the process can be quickly and efficiently performed.

A fifth aspect of the present invention is one where in the first aspect of the invention, the conveying device has; a turntable formed in an annulus ring which is rotatable, a plurality of mounting sections for mounting a plurality of vessels on the turntable so as to subtend therebetween equally divided base central angles or central angles which are multiples of these, and a rotation drive section for repeatedly rotating and stopping at units of the base central angle in accordance with instructions from the operation/control section. According to this embodiment, since there is provided the mounting sections for mounting a plurality of vessels on the turntable so as to subtend therebetween equally divided base central angles or central angles which are multiples of these, the control and construction is simplified.

According to a sixth aspect of the invention, in the first aspect of the invention, a conveying speed, a conveying direction, a stop interval, a conveying interval, a conveying distance and/or a mounting position for the vessel are set by the operating/control device based on the contents or purpose of a specified process. According to this aspect of the invention, an efficient and quick operation can be designed in accordance with the contents or purpose of a process.

According to a seventh aspect of the invention, in the fifth aspect of the invention, as the separator, a centrifuge is provided adjacent to the inside or outside of the turntable. According to this aspect of the invention, an overall compact apparatus can be realized.

According to an eighth aspect of the invention, in the seventh aspect of the invention, a rotation speed of the centrifuge, a rotation time and a location of a vessel are set by the operation/control section based on a liquid contained in the vessel, the nature or weight of a precipitate or a target substance, and/or the contents or purpose of a process. As a result, optimum separation in accordance with the contents or purpose of a process can be performed.

According to a ninth aspect of the invention, in the first aspect of the invention, the dispensing section has; a pipette apparatus provided with a group of nozzles, and a moving device capable of moving the nozzles between the vessel mounted on the conveying device and a reagent tank provided apart from the conveying device. As a result, efficient dispensing can be performed with respect to the vessels mounted on the conveying device.

According to a tenth aspect of the invention, in the first aspect of the invention, a reagent tank to be drawn from by the dispensing section, a vessel to be dispensed to, an amount to be drawn or discharged, a speed of drawing or discharging, a timing or sequence of drawing or discharging, the presence of insertion or removal of the pipette tips or the timing therefor, the presence or timing of washing, and/or a relationship to movement are set by the operation/control section based on the contents of the indicated process. By this aspect of the invention, the process can be efficiently and quickly performed.

According to an eleventh aspect of the invention, in the first aspect of the invention, a sensor for detecting liquid level is provided in a reagent tank provided in the dispensing section, and liquid such as reagent is automatically supplied to the reagent tank in response to the sensor. As a result, since the reagent can always be filled in the reagent vessel and hence dispensing of the reagent can be continually performed without interruption, this can contribute to the speeding up and efficiency of the process.

According to a twelfth aspect of the invention, in the first aspect of the invention, the liquid processing section is provided with a magnet or electromagnet such that poles thereof are positioned outside a bottom or side wall of each well of a mounted vessel.

According to a thirteenth aspect of the invention, in the first or twelfth aspects of the invention, the liquid processing section is separately provided with a liquid removal section for removing liquid other than precipitate inside a vessel mounted on the conveying device, and a liquid extraction section for extracting liquid other than precipitate inside a vessel mounted on the conveying device. According to this aspect of the invention, since the removal of liquid and the extraction of liquid are executed with separate dedicated apparatus, then these can be respectively devoted to; the process for removing the liquid as much as possible and recovering the precipitate without the liquids mixing, and the process for extracting the liquid without the precipitate mixing. Therefore extraction of high quality and accuracy can be performed.

According to a fourteenth aspect of the invention, in the thirteenth aspect of the invention the liquid removal section has; a liquid drawing section, one or a plurality of nozzles communicated with the liquid drawing section, and which can be inserted into the vessel, a vertical movement mechanism for moving in a vertical direction the nozzles or vessel in order to insert the nozzles into the vessel or into each well of the vessel, and a combined incline mechanism for inclining the nozzles and vessel in combination with respect to the vertical axis, and the removal section inclines the vessel and draws in liquid from the nozzles or discharges liquid from an opening of the vessel without influencing a precipitate. According to this aspect of the invention, by automatically inclining the nozzles and vessel in combination with respect to the vertical axis, then liquid can be drawn from the nozzles or discharged from the opening of the vessel without influencing the precipitate.

According to a fifteenth aspect of the invention, in the fourteenth aspect of the invention, the liquid removal section has a position adjustment mechanism for adjusting a relative position between tips of the nozzles and inner walls of the vessels in order to contact the tips of the nozzles against the inner walls of the vessels. According to this aspect of the invention, since the nozzles or the vessel are inclined or rotated, with the position adjusted so that the tips of the nozzles are contacted against the walls of the vessel, the liquid can be reliably drawn by the nozzles without leakage.

According to a sixteenth aspect of the invention, in the fifteenth aspect of the invention, the position adjustment mechanism has; a cylindrical support section for supporting a plurality of nozzles arranged along a horizontal cylindrical axis direction thereof and passing through opposite cylindrical side faces to protrude downwards, so as to be rotatable about the cylindrical axis, a flexible tube for communicating between an upper end of each of the nozzles and the liquid drawing section, and a rotation mechanism for rotating the cylindrical support section and/or a slide mechanism for sliding the cylindrical support section in a horizontal direction. As a result, the tips of the nozzles are contacted against the inner walls of the vessels. Consequently, according to this aspect of the invention, positional adjustment can be performed with a simple mechanism.

According to a seventeenth aspect of the invention, in the thirteenth through sixteenth aspects of the invention, in the discharge section, an incline angle, incline speed and/or incline timing of the combined incline mechanism, a movement direction and movement amount by the relative movement mechanism, and a drawing speed and/or a drawing timing, are set by the operation/control section based on; the contents or purpose of an indicated process, a shape or size of a nozzle or vessel, the nature of a precipitate or solution and an amount of these and/or a level of these

According to an eighteenth aspect of the invention, in the thirteenth aspect of the invention, the liquid extraction section for extracting liquid other than precipitate has an integration apparatus having a drawing/discharge device for drawing and discharging fluid, and a plurality of nozzles which pass fluid thereinside by the drawing and discharging, and which are provided so as to be insertable into each well of the vessel, and the liquid extraction section draws liquid in a vessel mounted on the conveying device and discharges this to another vessel mounted on the conveying device. According to this aspect of the invention, a process can be performed simultaneously for a large number of wells, and hence the process can be efficiently and rapidly performed.

According to a nineteenth aspect of the invention, in the eighteenth aspect of the invention, the integration apparatus has; a main body provided with a plurality of cylinders corresponding to a plurality of wells provided in the vessel, a plunger section provided with a plurality of plungers which protrude so as to be insertable into each of the cylinders, a plurality of nozzles provided beneath the cylinders for communicating with the cylinders, and a tip section having a plurality of pipette tips detachably fitted to the nozzles.

According to a twentieth aspect of the invention, in the eighteenth or nineteenth aspects of the invention, the extraction section has; a moving device for moving the integration section between a vessel mounted on the conveying device and a vessel or a washing section for pipette tip washing provided apart from the conveying device. As a result, the pipette tips can be immediately washed enabling reuse, and hence the process can be efficiently and rapidly performed.

According to a twenty first aspect of the invention, in the nineteenth aspect of the invention, the integration apparatus uses a link mechanism to attach or remove the tips to or from the nozzle section. By using a link mechanism, a plurality of pipette tips can be simultaneously fitted or detached easily by hand. For the link mechanism, for example with a tip section formed with a tip mounting section for mounting a plurality of pipette tips, this may be constructed with; an elongate plate shape detaching member which contacts with an outside face of the nozzles provided above the tip mounting section for detaching the pipette tips from the nozzles, a plate shape member which supports the tip mounting section and the detaching member at opposite ends thereof and which is moveable up and down with respect to a main body, a link which is axially supported on the main body with one end thereof axially supported on the plate shape member, and a link with one end axially supported on the plate shape member and the other end having a handle, and which is rotatably connected in the vicinity of the one end with the other end of the link.

According to a twenty second aspect of the invention, in the eighteenth aspect of the invention, a drawing and discharging speed of the liquid extraction section, an insertion depth of a pipette tip in a vessel, a drawing and discharging timing, or a type of pipette to be used are set by the operation/control section based on the contents or purpose of a process, the nature or amount of liquid, precipitate, or target substance, or the shape or size of a vessel.

According to a twenty third aspect of the invention, in the third aspect of the invention, for the agitating section, individual through holes are bored in the mounting sections of a turntable for mounting each vessel of the conveying device, and at a secured position on a path at at least one location where each mounting section stops there is provided a vibration pin which passes through the through hole from the bottom side of the turntable and which is moveable back and forth and which can be vibrated, and above a vessel which is mounted on the turntable at the secured position there is provided a vessel holding section for pushing and holding the vessel which has been pushed upwards by advancing the vibration pin.

According to this aspect of the invention, agitating can be added to the contents of the vessel while the vessel is substantially mounted on the conveying device. Consequently, it is not necessary to significantly move the vessel from the conveying position to the agitating position, and hence the process can be performed quickly at high speed. In the case where such an agitating section is provided, if the vibration pin and the portion of the bottom of the vessel where the vibration pin touches, are made so as to fit, the effectiveness of the agitating can be increased.

Furthermore, since the dispensing of the reagent or the like into the specimen and the agitating are performed normally as a pair, then if the agitating section is provided at the dispensing position, the agitating can be performed after dispensing without moving the vessel to the agitating position. Hence the process can be performed at high speed. Regarding the through holes, in the case where the vessel is inclined when the liquid removal section removes the liquid, then these can also be used as holes for taking pins for lifting the vessel from beneath the conveying device, when the vessel is lifted from the conveying device.

According to a twenty fourth aspect of the invention, in the twenty third aspect, the vessel holding section of the agitating section is formed from a frame for contacting the vessel only at a rim on an upper face of the vessel, and the nozzles or tips of the dispensing section can be inserted from above the frame into the vessel which is beneath the frame. Consequently, according to this aspect of the invention, dispensing can be performed with the vessel mounted on the conveying device, and immediately after this agitating can be performed.

According to a twenty fifth aspect of the invention, in the twenty second or twenty third aspects of the invention, the vibration strength, vibration period pattern, vibration time and timing due to the agitating section are set by the operation/control section based on the nature or amount of liquid contained in a vessel, the shape or size of a vessel, and/or the contents or purpose of a process. As a result, fine operation can be performed according to the contents or purpose of various processes.

According to a twenty sixth aspect of the invention, in the first aspect of the invention, the vessel moving device moves the vessel between an incubator provided in addition to the conveying device and set at one or more temperatures, and the conveying device and/or the separator. As a result, diversification of the processes can be planned.

According to a twenty seventh aspect of the invention, in the twenty sixth aspect of the invention, movement origin and movement destination, movement timing, or movement speed of the vessel are set by the operation/control section based for example on the contents or purpose of a process, or a liquid amount contained in a vessel.

A twenty eighth aspect of the invention has with respect to an automatic separator/extractor having: a conveying device for conveying a vessel along a closed path, a dispensing section for dispensing a reagent or the like into the vessel, a liquid processing section for removing and/or extracting liquid other than a precipitate inside the vessel, a separator for performing separation with respect to contents inside the vessel, a vessel moving device for bringing in and taking out the vessel with respect to the conveying device and/or separator, and an operation/control section for performing operation and control with respect to the conveying device, the dispensing section, the liquid processing section, the vessel moving device, and the separator, a step for analyzing instructions from outside, a step for bringing in and mounting a vessel on the conveying device, a step for dispensing reagent or the like into a vessel mounted on the conveying device according to instructions, a step for agitating contents inside the vessel mounted on the conveying device according to instructions, a liquid processing step for removing and/or extracting liquid other than precipitate inside a vessel mounted on the conveying device according to instructions, a step for bringing in or taking out the vessel with respect to the conveying device and/or the separator according to instructions, and a separation step for performing separation according to instructions.

According to a twenty ninth aspect of the invention, in the twenty eighth aspect, the separation step comprises; a step for mounting a vessel containing a target substance which is combined with magnetic particles on a magnetic force device for generating a magnetic force and precipitating the magnetic particles according to instructions, and the vessel is moved to a position where there is no influence of magnetic force due to the magnetic force device or the like, and then with the vessel under the influence of a magnetic force due to a magnetic force device other than the magnetic force device, or in a condition where a magnetic force of the magnetic force device is received, the vessel is rotated and liquid other than the magnetic particles discarded.

A liquid processing apparatus according to a thirtieth aspect of the invention has; a liquid drawing section, a plurality of nozzles communicated with the liquid drawing section, and which can be inserted into each well of a microplate, a vertical movement mechanism for moving in a vertical direction the nozzles or microplate in order to insert the nozzles into each well of the microplate, a combined incline mechanism for inclining the nozzles and microplate in combination with respect to a vertical axis, and a relative movement mechanism for relatively moving tips of the nozzles and wells of the microplate, and which inclines the microplate and draws in liquid from the nozzles or discharges liquid from an opening of the microplate without influencing a precipitate.

An integration apparatus according to a thirty first aspect of the invention has; a body provided with a plurality of cylinders corresponding to a plurality of wells provided in a microplate, a plunger section projectingly provided with a plurality of insertion rods which are insertable in each of the cylinders, a plurality of nozzles provided beneath each of the cylinders and communicating with the cylinders, and a plurality of pipette tips removably fitted to the nozzles....

As described above, according to the respective aspects of the invention, at the time of performing supernatant extraction or extraction of a precipitate, a fine flow speed, an incline angle of the vessel or drawing device, upper and lower stop positions of the nozzle, drawing strength and so forth can be automatically set by means of the operation/control section based on the differences in the nature of the precipitate or the liquid. Consequently, extraction or separation of a precipitate or supernatant at a high quality, accuracy and reliability, above that which can be achieved by manual methods can be quickly and reliably achieved.

According to the respective aspects of the invention, the process can be automated so that a persons hands are not necessary. Consequently, complex processes can be released from a persons hand, and reliable processing where cross contamination can be kept to a minimum can be performed.

According to the respective aspects of the invention, by combining various apparatus with a conveying device having a closed path, then due to the comparatively simple construction, manufacturing costs can be reduced, and by making this compact, it is possible to take up a minimum space

According to the respective aspects of the invention, it is possible to arrange the necessary equipment for the processes so that from the beginning to end of a process, this can be achieved consistently, efficiently and quickly, thereby contributing to a reduction in running cost.

According to the respective aspects of the invention, it is possible to perform a reliable supernatant processing operation at the time when an operation is performed for a supernatant processing step where after dissolving protein, and the lipid of cells, bacteria and so forth, and putting DNA into suspension, the impurities are further precipitated, and the DNA remains in the supernatant, and at this time, the supernatant only is reliably separated from the turbid precipitate, so that there is no precipitate mixed at all.

According to the respective aspects of the invention, it is possible to use a dispensing device which uses pipette tips, so that highly accurate dispensation of small amounts of liquid is possible, to thereby enable processing at a high accuracy.

According to the respective aspects of the invention, it is possible to use a microplate having a large number of wells, and perform drawing and discharging processing in large quantities altogether, to thereby enable efficient and speedy processing of large quantities of liquid, to enable correspondence of large scale simulation base sequences.

### BRIEF DESCRIPTION OF THE DRAWINGS

FIG. 1 is an overall view of an separator/extractor according to an embodiment, and a side view of a turntable.

FIG. 2 is a plan view and a front view of a dispensing section and an agitating section of the separator/extractor according to the embodiment.

FIG. 3 is a diagram showing a reagent tank area provided in the dispensing section of the separator/extractor according to the embodiment.

FIG. 4 is a front view and a side view of a liquid removal section according to the embodiment.

FIG. 5 is an explanatory drawing of a position adjustment mechanism of a liquid removal section according to the embodiment.

FIG. 6 is a front view, side view and plan view of a liquid extraction section according to the embodiment.

FIG. 7 is a diagram showing the main parts of the liquid extraction section according to the embodiment.

FIG. 8 is a concept diagram showing a separator which uses magnetic force, according to the embodiments.

### BEST MODE FOR CARRYING OUT THE INVENTION

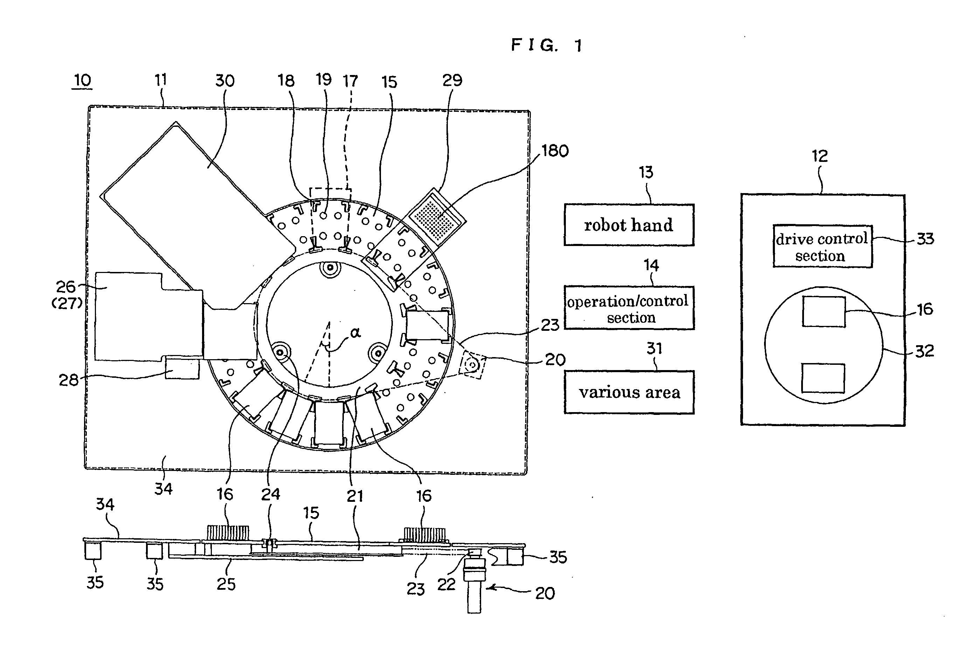

An separator/extractor according to embodiments of the present invention is described with reference to FIG. 1 through FIG. 8. The present invention is not limited to the embodiments apart from where especially specified. FIG. 1 shows the whole of the separator/extractor according to an embodiment.

The automatic separator/extractor 10 has a processing section 11 for extraction or the like (referred to hereunder as an extraction processing section 11), a centrifugal separation section 12 as a separator, a robot hand 13 as a vessel moving device, and an operation/control section 14. The extraction processing section 11 has a turntable 15 formed in an annulus ring which is rotatably driven. The turntable 15 is provided with a plurality of mounting sections 17 (16 in this example) for mounting microplates 16 (hereunder "plates") having deep wells, so as to subtend therebetween base center angles (denoted αin the figure) or center angles which are multiples of these at even spacing. The turntable 15 is formed for example from aluminum plate with for example an outside diameter of 80 cm and an inside diameter of 40 cm. Here the turntable 15 corresponds to the conveying device, and the plate 16 corresponds to the vessel. The home position of the turntable 15 may be recognized by an optical sensor.

The plate 16 is an approximately rectangular shape vessel formed from plastics or the like and provided with a large number of wells (96) grouped together in 8 columns by 12 rows, for retaining a liquid. The mounting section 17 comprises four L-shape locators 18 attached to the turntable 15 so as to secure the four corners of the plate 16, and a portion surrounding the locators 18, and is for mounting the plate 16 at a set position of the turntable 15. The locators 18 are made for example from plastics, and four pinholes 19 are drilled in the turntable 15 surrounded by the mounting section 17.

The turntable 15 is driven by a rotation drive section 20 which uses an AC servo motor so as to repeatedly rotate and stop at units of the base central angle α. A timing belt 23 is spanned between a drive wheel 22 of the rotation drive section 20 and an annular protrusion 21 provided so as to protrude downward around the inner peripheral rim of the turntable 15. Three rollers 24 for smooth rotation of the turntable 15 are provided so as to rollingly contact with the inner peripheral face of the annular protrusion 21. Reference symbol 25 denotes a support member for holding the turntable 15 on a table 34, and reference symbol 35 denotes support members for the table 34.

The extraction processing section 11 has a dispensing section 26 for dispensing reagent to the plates 16 mounted on the turntable 15, a liquid extraction section 29 for extracting liquid other than precipitate from inside the plates 16 mounted on the turntable 15, and a liquid removal section for removing liquid other than precipitate from inside the plates 16 mounted on the turntable 15. Here the liquid extraction section 29 and the liquid removal section 30 correspond to the liquid processing section. The dispensing section 26 is provided with an agitating section 27 for agitating the contents of the plates 16. Since cases where agitating is performed immediately after dispensing are numerous, then this saves conveying time from dispensing until agitating, and contributes to a reduction in equipment size. These dispensing section 26, agitating section 27, liquid extraction section 29 and liquid removal section 30 are provided around a path through which the turntable 15 passes, at fixed positions where each of the mounting sections 17 stops. Moreover, in the automatic separator/extractor 10 there is provided a reagent supply section 28, and various areas 31 in which is provided an incubator set at various temperatures, a plate stocker and the like.

The operation/control section 14 is for performing operation and control for the turntable 15, the dispensing section 26, the agitating section 27, the liquid extraction section 29, the liquid removal section 30, the robot hand 13 and the centrifugal separation section 12 and so forth. The operation/control section 14 has an input device such as a switch, keyboard, touch panel, mouse, communication facility, a floppy disc, CD, MO, card, or picture reader for input of operation commands and various types of data to the separator/extractor by a user, an output device such as a printer or display section such as a CRT for displaying various setting data, touch panel display, analysis data, operating status, operating method, and warning alarm, a storage device such as a memory, hard disc, CD, MO, or floppy disc for storing various data such as program data, input data and the like, and an information analysis device comprising a CPU for analyzing instructions or data, and executing drive instructions to the turntable 15. Furthermore, the operation/control section 14 in addition to automatic operation, can select manual operation where a step operation for temporarily stopping on completion of the respective steps, or only operations such as liquid discharge, liquid extraction, dispensing, agitating, and separation are selected, or can select test operation for performing verification or adjustment of the operation. Moreover, there is provided an abnormal stop switch which can shut off all power at the time of an emergency.

The centrifugal separation section 12 has a drive control section 33 for performing drive control related to the centrifugal separation section 12, and a rotor 32 for exerting a centrifugal force on positioned plates 16 by high speed rotation, to thereby perform centrifugal separation due to differences in specific gravity. The plates 16 which are the object of the centrifugal separation, are provided on the rotor 32.

The robot hand 13 is for bringing in and taking out the plate 16 with respect to the turntable 15 and the centrifugal separation section 12. The robot hand 13 clamps the plate 16 with a handling arm having rubber plates on the side faces. The robot hand 13 has a vertical slide mechanism. Moreover, the robot hand 13 also performs movement of the plate 16 other than between the turntable 15 and the centrifugal separation section 12, for example movement between the plate stocker provided in the reagent dispensing area 31 and the turntable 15 or the centrifugal separation section 12.

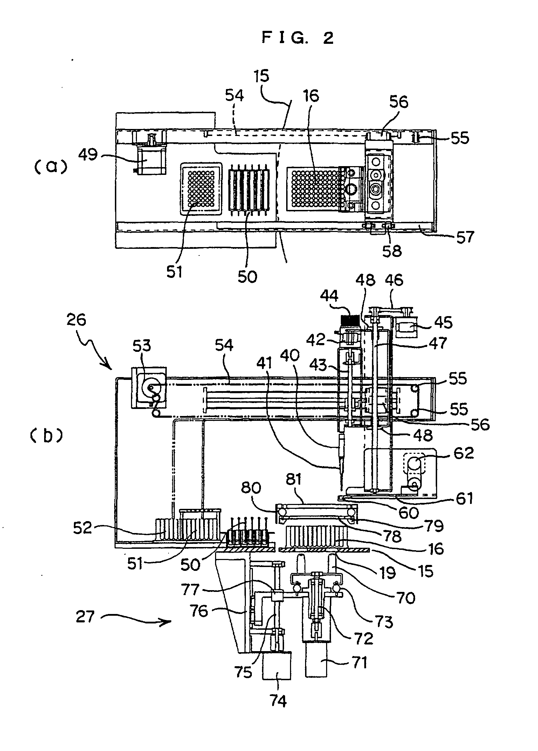

FIG. 2 shows the parts provided in the dispensing section 26 and the agitating section 27. FIG. 2 (a) is a plan view, while FIG. 2 (b) is a front view. The dispensing section 26 has for example an group of eight nozzles 40 with eight nozzles connected in parallel, and pipette tubes 41 fitted to the group of eight nozzles 40. The group of eight nozzles 40 is able to simultaneously draw in and discharge with respect to wells of eight rows of the 96 hole plate of the plate 16 mounted on the turntable 15 therebelow. Above the nozzles 40 there is provided a suction/discharge mechanism for performing drawing and discharging of the nozzles 40.

The suction/discharge mechanism has a motor 42, and a ball screw 43 driven by rotation of the motor 42. The motor 42 is provided with a heat shield 44 for preventing the influence of heating and cooling produced by the motor 42 on the nozzles 40. A vertical movement mechanism is provided adjacent to the suction/discharge mechanism for vertically moving the whole of the nozzles 40 and the suction/discharge mechanism. The vertical movement mechanism is provided with a motor 45, a belt 46 for transmission of rotational drive of the motor 45, a ball screw 47, and a nut section 48 threaded onto the ball screw 47 and secured to the nozzles 40. The nozzles 40 are provided with a horizontal movement mechanism enabling movement between the plate 16 mounted on the turntable 15, and a reagent tank 50, an unused tip rack 51, or a used tip rack 52 provided away from the turntable 15.

The horizontal movement mechanism has a motor 53, sprockets 55, a chain 54 spanning between the motor 53 and the sprockets 55, and a moveable body 56 which is secured to one side face of the frame which supports the nozzles 40 and which is moved by engagement with the chain. On the other side of the frame which supports the nozzles 40 is provided a wheel set 58. The wheel set 58 is mounted on a rail 57 and horizontally supports the nozzles 40. A liquid collection section 60 having a width to cover the tip holes of the 8 pipette tips 41 to prevent liquid dripping, is provided so as to be moveable back and forth beneath the 8 pipette tips 41. The liquid collection section 60 is controlled by an advance/retreat mechanism 61 driven by a motor 62, so as to retreat from the position of the 8 pipette tips 41 at the time of drawing and discharging, and so as to advance back at the time of movement other than at the time of drawing and discharging.

The reagent tank to be drawn from by the dispensing section 26, the position of the plate 16 to be discharged to, the drawing or discharging amount, the drawing or discharging speed, the drawing or discharging timing or sequence, the presence of fitting and detachment of the pipette tips and the timing thereof, and/or the operation or control of the movement, is performed by the operation/control section 14.

In using the dispensing section 26, the group of eight nozzles 40 is fitted with pipette tips 41 from the tip rack 51 by press fitting, and draws up a specified amount from the reagent tank 50 and repeatedly dispenses this in a proportion of 1/n to each well of the plate 16. Here the pipette tips 41 are for example made of polypropylene with a capacity of approximately 300 µ liters.

Next is a description of the agitating section 27 based on FIG. 2. As shown in FIG. 2, the agitating section 27 is provided at one location of a fixed position where the dispensing section 26 is provided, on the path through which the turntable 15 passes. The agitating section 27 is provided with vibration pins 70 which pass from beneath the turntable 15 through respective pin holes 19 drilled four each, in each of the mounting sections 17, and which can move back and forth in the vertical direction and vibrate. The vibration pins 70 are for applying to the plate 16, a slight vibration within a horizontal plane, with the vibration from a vibration source 71 transmitted via a transmission mechanism 72. The diameter of the pin holes 19 is made sufficiently larger than the diameter of the vibration pins 70 so that the vibration pins 70 do not contact with the turntable 15. The vibration pins 70 are connected to an advance/retract mechanism via a resilient body 73.

The advance/retract mechanism has an advance/retract motor 74, a ball screw 75 which is rotatably driven by the motor 74, and a nut section 77 which is threaded onto the ball screw 75 and secured to the vibration pins 70. Furthermore, the motor 74 and the ball screw 75 are secured to the table 34 by a support section 76. Above this secured position, and upward of the plate 16 mounted on the turntable 15, this has a holding frame 78 for receiving and holding the plate 16 which is pushed upwards by the vibration pins 70 advancing through the pin holes 19. A rim portion 79 of the holding frame 78 is formed with a sloping face on the side for receiving the plate 16 so as to be able to correspond to differences in size and misalignment of the plate 16.

The holding frame 78 is further attached to a fixed frame 81 which is secured to the table 34, via a resilient body 80. At the center of the fixed frame 81 and the holding frame 78 is formed an opening portion of a size capable of taking insertion of the pipette tips 41 of the dispensing section 26 into the plate 16 downward therefrom. The strength of vibration by means of the agitating section 27, the frequency pattern of the vibration, the vibration period, and the timing are set by the operation/control section 14 based on the nature or quantity of liquid contained in the plate 16, the shape or size of the plate 16, and/or the contents or purpose of the process.

If the tip of each of the vibration pins 70 is provided with a concave portion having the same curved surface to match a curved surface convex portion with which the tip abuts at the bottom of the wells of the plate 16, then the plate 16 coming off and dropping due to vibration can be positively prevented. In using the agitating section 27, the vibration pins 70 are raised from beneath the turntable 15, and after closely contacting (securing to) the holding frame 78 provided at the upper end in the raising direction, vibration is applied.

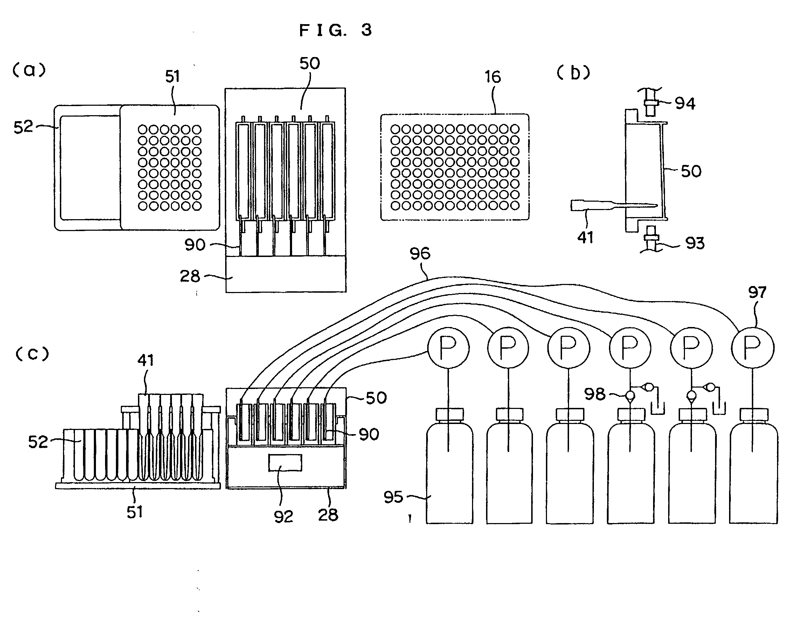

FIG. 3 shows in detail the reagent dispensing area shown in FIG. 2.

FIG. 3 (a) is a plan view of the reagent dispensing area. A reagent tank 50 is provided for example as six, and each reagent tank 50 has a width capable of taking insertion of the 8 pipette tips 41 fitted to the group of eight nozzles 40. Each reagent tank 50 may be partitioned for each pipette tip, or may be partitioned for each of several tips, or may not be partitioned inside so that a common reagent is drawn up Furthermore, partitions separating between the reagents may be provided between each reagent tank for preventing mixing of the reagents. Nozzles 90 for supplying reagent from outside are provided for each reagent tank 50. The nozzles 90 are provided projecting from a reagent supply section 28, and each nozzle 90 is provided so as to be capable of insertion and extraction into and out of the reagent tank 50 by attachment or removal of the reagent supply section 28.

As shown in FIG. 3 (c), the insertion and extraction of each nozzle 90 into and out of the reagent tank 50 may be detected by a micro switch 92, so that reagent can be reliably supplied to the reagent tank 50. Furthermore, as shown in FIG. 3 (b), a light emitting section 93 and a light receiving section 94 for detecting the liquid surface, are provided on the side face of the reagent tank 50 to detect the liquid surface by means of light quantity, and in the case where the level of the liquid surface falls below a fixed value, reagent is supplied to the reagent tank 50 from outside, so that there is always reagent inside the reagent tank 50. The nozzles 90 are communicated via a flexible tube 96 with reagent vessels 95 for holding reagent liquid, provided beneath the turntable 15 or the table 34, and the reagent is supplied by pumps 97 via the nozzles 90. At this time, non-return valves 98 may be provided so as to prevent back flow to the reagent vessels 95. After completion of the operation, the pumps may be reversed so that the reagent is returned to the reagent vessels 95.

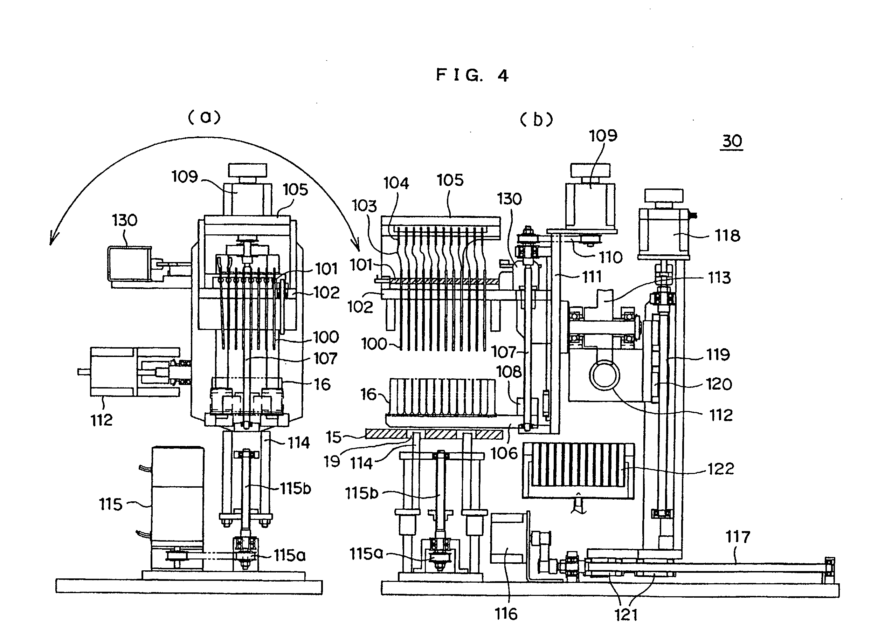

Next is a description of the liquid removal section 30, based on FIG. 4.

FIG. 4 (a) is a side view of the liquid removal section 30, while FIG. 4 (b) is a front view. The liquid removal section 30 has a manifold on which are arranged a large number (for example 96) of suction nozzles 100 in matrix form, corresponding to the plate 16 having a large number of wells (for example 96). The nozzles 100 are formed from a non-flexible material such as stainless steel. The nozzles 100 are supported for each row (or each column) by a plurality of cylindrical support sections 101, so as to be rotatable about the cylindrical axes thereof. The cylindrical support sections 101 support the nozzles 100 so that they are arranged along the horizontal cylindrical axis direction thereof, passing through opposite cylindrical side faces to protrude downwards. The cylindrical support sections 101 are rotatably attached to a support member 102. The ends of the nozzles 100 above the cylindrical support sections 101 are communicated with tubes 104 at an upper section formed from a non-flexible material such as stainless steel, via flexible tubes 103 of silicone rubber or the like. The tubes 104 are communicated with a holding tank 105 for temporarily storing liquid other than precipitate, which is drawn up from the plate 16 by the nozzles 100, for subsequent discharge.

The liquid removal section 30 has a plate raising mechanism for raising the plate 16 to insert the nozzles 100 into each well. The plate raising mechanism has a holder 106 for holding the plate 16, a motor 109, a ball screw 107 which is driven by rotation transmitted by a belt 110 spanned between a drive shaft of the motor 109 and the ball screw 107, and a nut section 108 which is secured to the holder 106 and threadedly engaged with the ball screw 107. Furthermore, with the liquid removal section 30, a push up mechanism which raises up the plate 16 to a predetermined height for enabling insertion of the holder 106 between the plate 16 and the turntable 15, is fixedly provided beneath the turntable 15.

The push up mechanism has push up pins 114 provided so as to be moveable back and forth through the four pin holes 19 provided in each of the mounting sections 17 of the turntable 15. The push up pins 114 are driven back and forth by a ball screw 115b which is concentrically coupled to a roller 115a which is rotated by a motor 115.

The support member 102 which supports the nozzles 100, and the plate raising mechanism comprising the ball screw 107 etc. are fixedly provided on a frame 111 of the manifold. The liquid removal section 30 has a combined incline mechanism which inclines the nozzles 100, the plate 16 which is raised up by the holder 106, and the frame 111 as one body at a predetermined angle with respect to the vertical axis. Here the predetermined angle is for example approximately 120°. The combined incline mechanism has a motor 112, and a gear 113 having an axis of rotation orthogonal to the drive shaft of the motor 112 and secured to the frame 111. The gear 113 and a gear provided on the drive shaft of the motor 112 use for example a screw gear or a bevel gear. By means of this mechanism, as shown by the arrow in FIG. 4 (a), the nozzles 100 and the plate 16 can be inclined as one. The liquid removal section 30 is provided with a vertical movement mechanism including all of the frame 111 and the combined incline mechanism, which is moveable in the vertical direction, and there is provided a back and forth movement mechanism for moving the vertical movement mechanism together with the manifold, back and forth.

The vertical movement mechanism has a motor 118, a ball screw 119 which is rotated by the motor, and a moveable body 120 which is threadedly engaged with the ball screw 119 and secured to the frame 111 for vertical movement. The back and forth movement mechanism has a motor 116, a ball screw 117 which is rotated by the motor 116, and a nut section 121 threadedly engaged with the ball screw 117 and secured to the vertical movement mechanism and the frame 111. By means of the vertical movement mechanism and the back and forth movement mechanism, the manifold can be moved between the plate 16 on the turntable 15 and a cleaning tank 122 for cleaning the nozzles 100. By providing the tip of each of the push up pins 114 with a concave portion having the same curved surface to match the curved surface convex portion with which the tip abuts at the outer bottom of the wells of the plate 16, then the plate 16 coming off and dropping when the plate 16 is pushed up can be positively prevented.

The liquid removal section 30 further has a position adjustment mechanism for adjusting the relative position between the tips of the nozzles and the inside walls of each well of the plate 16 so as to positively perform the drawing of liquid with the tips of the nozzles 100 in contact with the inner walls of each well of the plate 16. The position adjustment mechanism comprises a drive mechanism for rotating the cylindrical support sections 101.

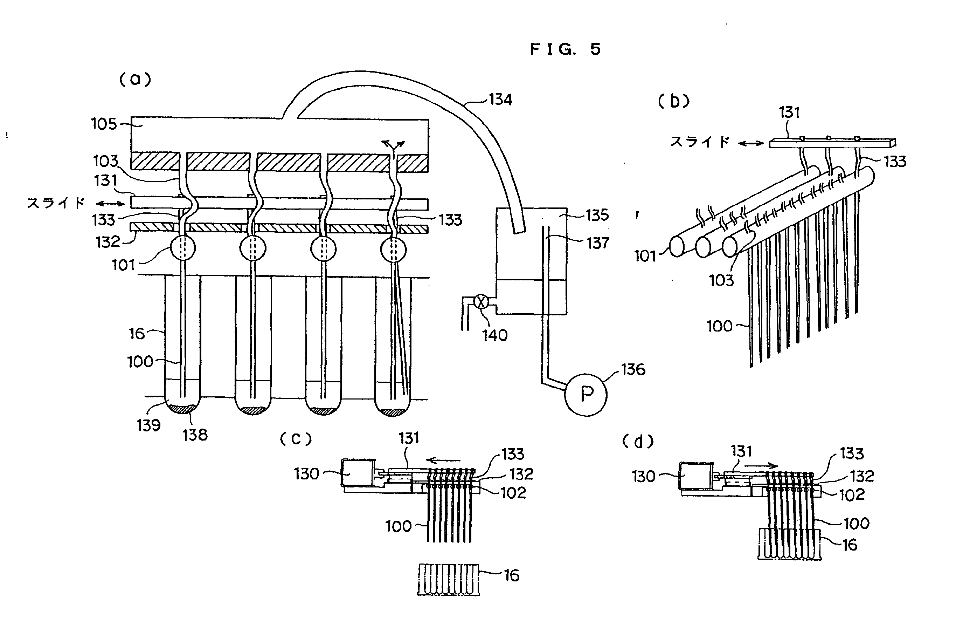

As shown in FIG. 5 (b), the protruding portions 133 in the vicinity of the one end of each cylindrical support section 101 and formed from a resilient body protrude upwards, and the tips of the protruding portions 133 are secured to an actuator 131. The actuator 131 is driven back and forth by electromagnetic force from a solenoid 130. Furthermore, the protruding portions 133 pass through a stopper 132. Moreover, the holding tank 105 is communicated with a pressure tight discharge liquid tank 135 via a line 134, and in the discharge liquid tank 135 there is provided a suction nozzle 137 of a suction pump 136 together with a tap 140, for discharge of the discharge liquid.

In the case where the position adjustment mechanism is used, the nozzles are inserted into each well of the plate 16 by the vertical movement mechanism, to a level where they do not influence the precipitate 138 but where they come in contact with the liquid 139 other than the precipitate 138. Next, using the position adjustment mechanism, the relationship of the nozzles 100 with the inner walls of each well is adjusted so they are inclined to each other so that the tips of the nozzles are contacted with the inner walls of the wells. To achieve this, as shown in FIG. 5 (d), the actuator 131 is advanced so that each of the protruding portions 133 secured to the actuator 131 and formed from a resilient body are deformed, and due to the force for their restoration, the cylindrical support sections 101 on which the protruding portions 133 are provided are rotated so that the nozzles 100 are inclined, and the tips of the nozzles 100 are contacted with the inner walls of each well. On the other hand, when the actuator 131 is retracted, then due to the stopper 132, the protruding portions 133 are returned to their original condition. Moreover, due to the stopper 132, further shape change of the protruding portions 133 other than this is prevented. Therefore as shown in FIG. 5 (c), the nozzles 100 return to their original condition protruding downwards from the cylindrical support sections 101.

The tips of the nozzles 100 of the manifold are not limited to the case where they are absolutely straight, and a case where these are bent in an approximate L-shape is also possible. In the case where these are bent, it is possible to have only the tips of the nozzles 100 in contact with the inner walls of the vessel. Therefore this contributes to preventing cross contamination, or liquid spill due to the capillary phenomena. Furthermore, the positional relation of the nozzle with the wall of the vessel is not limited to the inclined case, and a case where these slide is also possible. The inside diameter of the nozzles is approximately 1 mm with the wall thickness also approximately 1 mm.

In using the liquid removal section 30, in order to insert each nozzle 100 into each well, at first the plate 16 is pushed up by the push up mechanism to a certain height. Then the holder 106 is inserted into the space which is formed between the plate 16 and the turntable 15, and by lifting up the holder 106 the nozzles 100 are inserted into each well of the plate 16 while drawing to remove the supernatant. Then, by means of the position adjustment mechanism, the nozzles 100 are inclined at a slight angle inside the wells of the plate 16 so that each nozzle 100 closely contacts the inner wall of each well. Next, the supernatant is drawn and removed while turning the plate 16 with the nozzles 100 inserted, at a low speed by means of the combined incline mechanism. The nozzles 100 are stopped at a position so as not to influence the precipitate, being turned for example through approximately 120°. After turning and drawing, these are moved to a washing tank 122 of for example a washing liquid overflow system, and a fixed amount of washing liquid is drawn to thereby wash the inside and outside of the nozzles. The washing liquid is filled into the washing tank 122 from the tank bottom by means of a flow pump, so that the washing liquid is continuously replaced.

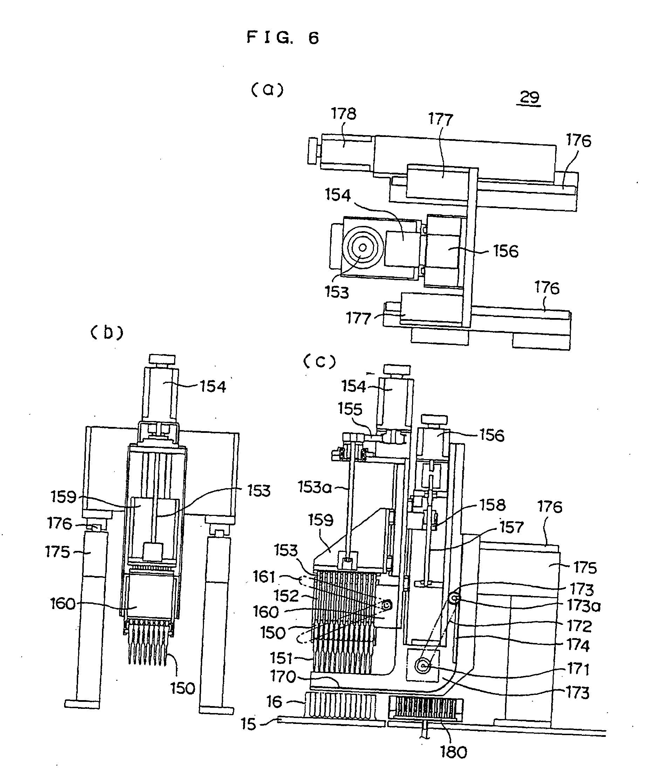

Next is a description of the liquid extraction section 29, based on FIG. 6.

FIG. 6 (a) is a plan view of the liquid extraction section 29, FIG. 6 (b) is a side view, while FIG. 6 (c) is a front view. As shown in FIG. 6 (c), the liquid extraction section 29 is an integration unit where a large number of nozzles 150 and cylinders 152 (for example 96) are integrated corresponding to a plate 16 having a large number of wells (for example 96). The integration unit has a tip section comprising a large number of tips 151 for fitting to the nozzles 150, and a plunger section having a large number of plungers 152 which are inserted inside the cylinders 152 for performing drawing and discharging.

The plungers 152 are moved up and down by means of a ball screw 153a, a motor 154 and a belt 155. Furthermore, the whole of the integration unit is moved up and down by means of a motor 156, a ball screw 157 which is rotated by the motor 156, and a nut section 158 secured to the integration unit and threadedly engaged with the ball screw 157. Moreover, the integration unit is provided with a cover plate 170 for covering beneath the pipette tubes 151 in order to prevent fluid dripping at times other than during drawing and discharging, and which can be driven back and forth by means of a chain 172 spanning between a drive shaft of a motor 171 and a sprocket 173, and a rack 174 which is meshed with a pinion 173a provided coaxial with the sprocket 173.

Furthermore, the integration unit is provided with a back and forth movement mechanism for moving between the plate 16 mounted on the turntable 15 and the washing section 180. The back and forth mechanism has a support stand 175 for supporting the integration unit, a rail 176 provided on the support stand 175, and sleeve bearings 177 for transfer drive of the integration unit, with the integration unit provided so as to be slideable along the rail 176. Reference symbol 178 denotes a motor for transfer driving.

In using the integration unit, the supernatants of the samples are drawn up altogether from the 96 wells of the plate 16 mounted on the turntable 15, and after being drawn up, the cylinder block 152a is raised, and the turntable 15 is rotated through the base central angle (one pitch). Next, liquid extraction is performed by discharging the samples to the plate. After dispensing, the integration unit is moved to the outer periphery of the turntable 15, after which for example this is lowered as far as the washing liquid overflow type nozzle washing tank 180 and the tip portions 151 are washed by repeated drawing and discharging of the washing liquid. On completion of the operation, the washing liquid is drawn to inside the cylinder, and thoroughly drawn and discharged repeatedly to remove the washing liquid and residual liquid.

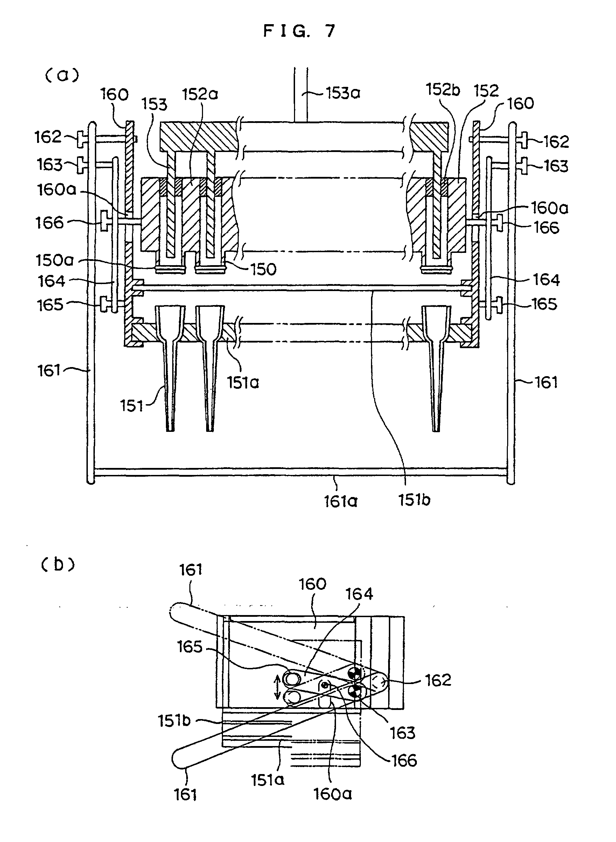

The integration unit will now be explained in detail based on FIG. 7.

As shown in FIG. 7 (a), the integration unit has a plunger section provided with a large number of plungers 153 for performing drawing and discharging by raising and lowering inside the cylinders 152, a cylinder block 152a being the main body provided with the large number of cylinders 152, a nozzle section having a large number of nozzles 150 which are communicated with the bottom ends of the cylinders 152, and a tip mounting section 151a on which are mounted a large number of pipette tips which are removably fitted to each of the nozzles 150. In the vicinity of the openings of the upper ends of each cylinder 152 are provided mechanical seals 152b for covering the space between the plungers 153 to prevent leakage, and also in the vicinity of the lower end of the nozzles 150 there are provided O-rings 150a for preventing leakage between the pipette tips 151 and the nozzles 150.

Furthermore, the integration unit is provided with a detaching mechanism for fitting or detaching the tips 151 to or from each of the nozzles 150 by hand. This mechanism is described by FIG. 7 (a) and (b). The mechanism has a plate member 160 fixedly provided on opposite sides of a tip mounting section 151a and an elongate detaching member 151b for detaching the pipette tips 151, and which is moveable up and down with respect to the cylinder block 152a, and a lever 161 with one end pivoted on the plate member 160 by a support point 162 so as to be rotatable through a predetermined angle, and having a handle 161a on the other end, and a link 164 with one end pivoted by a connection point 163 in the vicinity of the support point 162 of the lever 161, the other end pivoted on the plate member 160 by a point of action 165, and pivoted on the cylinder block 152a by a support point 166. The support point 166 is passed through a relief hole 160a drilled in the plate member 160, and is rotatably attached to the cylinder block 152a.

According to this mechanism, as shown in FIG. 7 (b), at first, at the position of the 2-dot chain line when the lever 161 is lowered by hand, the connection point 163 goes down, and hence the link 164 turns about the support point 166 so that the point of action 165 is raised, and hence the tip mounting section 15 la which is linked by the point of action 165 and the plate member 160 is raised so that the pipette tips 151 are fitted to the nozzles 150.

On the other hand, when the lever 161 is raised by hand, conversely the connection point 163 is raised and hence the link 164 turns about the support point 166 so that the point of action 165 is lowered. As a result, the plate member 160 which is connected to the point of action 165, and the tip mounting section 151a are lowered. However, the pipette tips 151 are merely mounted in the tip mounting section 151a, and hence only the tip mounting section 151a is lowered leaving the pipette tips 151 fitted to each of the nozzles 150. At this time, the detaching member 151b which is connected to the point of action 165 via the plate member 160 is also lowered together with the tip mounting section 151a. Since the detaching member 151b is provided so as to come into contact with the outer face of each of the nozzles 150, then due to lowering of the detaching member 151b, the pipette tips 151 fitted to the nozzles 150 are forced off so that the pipette tips 151 can be removed from the nozzles 150. FIG. 7 (a) shows a condition where the link mechanism is easily seen, but the position of the lever 161 and the condition of the pipette tips 151 are not necessarily the same as in FIG. 7(b). According to this embodiment, fitting or removing the pipette tips is performed by means of the link mechanism, applying the lever theory. Therefore the fitting and removal of the pipette tips can be performed easily with a minimum force.

Next is a description of the operation of the separator/extractor according to the embodiment.

A required reagent is prepared for the reagent tank, the washing liquid is prepared for the washing tank, and the plates 16 for reaction are loaded onto the turntable 15. Next, by performing instructions with respect to the operation/control section 14, a plate 16 containing a colon bacillus culture solution is delivered to the centrifugal separation section 12 and installed therein, and centrifugal separation performed. The plate 16 which has completed centrifugal separation is then mounted by means of the robot hand 13 on the mounting section 17 on the turntable 15 indicated by the operation/control section 14. The turntable 15 is then rotated to convey the plate 16 to the liquid removal section 30. Liquid other than the precipitate contained in the plate 16 is then removed by the liquid removal section 30, and alkali-SDS is added by the dispensing section 26 to the colon bacillus which has been collected, and this is then agitated by the agitating section 27 and dissolved.

An acetate is then added by the dispensing section 26 to the plate 16 containing the dissolved colon bacillus, and this is then agitated by the agitating section 27. The plate 16 is then taken out from the turntable 15 by the robot hand 13 and delivered to the centrifugal separation section 12, and the plasmid is included in the supernatant by the centrifugal separation section 12. The plate 16 is then again by means of the robot hand 13, mounted on the mounting section 17 of the turntable 15 and conveyed to the liquid extraction section 29. Then by means of the liquid extraction section 29, the supernatant is extracted, and the extracted supernatant is discharged and transferred to a plate mounted in a different space adjacent to the plate 16 on the turntable 15. This different plate is then conveyed to the dispensing section 26 by the turntable 15, and isopropanol is dispensed thereto.

The plate is then taken out from the turntable 15 by the robot hand 13, and delivered to the centrifugal separation section 12, and then subjected to centrifugal separation. The plate is then again, by means of the robot hand 13, delivered to the turntable 15 and mounted thereon, and conveyed to the liquid removal section 30. Then, after the liquid removal section 30 has removed the supernatant, this is conveyed to the dispensing section 26 by the turntable 15, and approximately 70% ethanol is dispensed thereto by the dispensing section 26. The plate is then again, by means of the robot hand 13, taken out from the turntable 15, and delivered to the centrifugal separation section 12 and subjected to centrifugal separation. The plate is then again delivered to the turntable 15, and conveyed to the liquid removal section 30, where the supernatant is removed and the plasmid is obtained as precipitate.

These embodiments are specifically described for the purpose of better understanding the present invention and do not exclude other embodiments. Accordingly modification is possible within a scope in which the gist of the invention is not changed. For example, in the above description, only the case of a 96 hole plate is described. However the invention is not limited to this case. For example, this may be 384 hole plate. Furthermore, only the case where a centrifuge is used as the separator is described. However, the invention is not limited to this case. For example, as shown in FIG. 8 a magnetic force may be used as a separator, and the separation object contained in the plate 16 combined with magnetic particles and separated using a separator 200 with poles of magnets 201 arranged in reverse polarity to each other. In this case, the scale of the apparatus can be further reduced. Furthermore, since the precipitate can be attached to the bottom of the vessel by magnetic force, the disposal or extraction of liquid other than the precipitate can be precisely performed. Moreover, by combining centrifugal separation with magnetic separation, reliability can be even further increased. Furthermore, by providing the magnetic force device which uses the separator 200 in for example the liquid processing section, the extraction or the removal of the liquid other than the precipitate can be reliably performed. In this case, instead of the case where, as with the separator 200, the magnets or the electromagnetic are provided so that the poles are positioned at the bottoms of the respective wells of the vessel, the magnets or electromagnets may be provided so that the poles are positioned at the sides of the respective wells of the vessel. In this case, the precipitate is attached to the sides of the respective wells of the vessel. Consequently, even if the nozzles are inserted to close to the bottom, the nozzles will not contact with the precipitate. Hence even if the vessel is not inclined or turned, the disposal or extraction of the liquid other than the precipitate can be carried out even more satisfactorily. Consequently, control is simplified and operating costs are also reduced. Furthermore, since the magnetic poles are provided so as to be positioned on the side faces of each of the wells of the vessel, then one pole can have an influence on the adjacent wells. Hence the poles can be used efficiently.

Moreover, the conveying device is not limited to a turntable and the number of mounting sections thereon also is not limited to 16, and the position or the arrangement sequence of the dispensing section, the liquid extraction section, the liquid removal section, and the agitating section and so forth, is also not limited to that shown. Furthermore, the constructions used for the respective apparatus is also not limited to that of the above description.

## Claims

1. An automatic separator/extractor having;
conveying means for conveying a mounted vessel along a closed path,
a dispensing section for dispensing a reagent or the like into the vessel mounted on said conveying means,
a liquid processing section for removing and/or extracting liquid other than a precipitate inside the vessel mounted on said conveying means,
a separator for performing separation with respect to the contents inside a vessel which is mounted on said conveying means and/or a vessel which is installed away from said conveying means,
vessel moving means for bringing in and taking out said vessel with respect to said conveying means and/or separator, and
an operation/control section for performing operation and control with respect to said conveying means, said dispensing section, said liquid processing section, said vessel moving means, and said separator.

2. An automatic separator/extractor according to claim 1, wherein said separator exerts a centrifugal force on a vessel containing a substance to be separated, and/or exerts a magnetic force on a vessel containing a substance to be separated which is combined with magnetic particles, to thereby perform separation.

3. An automatic separator/extractor according to claim 1, having an agitating section for agitating the contents of the vessel mounted on said conveying means, and said agitating section is operated and controlled by the operation/control section.

4. An automatic separator/extractor according to any one of claim 1 through claim 3, wherein said vessel is a microplate provided with a plurality of wells, and said conveying means mounts and conveys a plurality of said vessels.

5. An automatic separator/extractor according to claim 1, wherein said conveying means has; a turntable formed in an annulus ring which is rotatable, a plurality of mounting sections for mounting a plurality of vessels on the turntable so as to subtend therebetween equally divided base central angles or central angles which are multiples of these, and a rotation drive section for repeatedly rotating and stopping at units of the base central angle in accordance with instructions from said operation/control section.

6. An automatic separator/extractor according to claim 1, wherein a conveying speed, a conveying direction, a stop interval, a conveying interval, a conveying distance and/or a mounting position for the vessel are set by the operating/control means based on the contents or purpose of a specified process.

7. An automatic separator/extractor according to claim 5, wherein as said separator, a centrifuge is provided adjacent to the inside or outside of said turntable.

8. An automatic separator/extractor according to claim 7, wherein a rotation speed of said centrifuge, a rotation time and a location of a vessel are set by said operation/control section based on a liquid contained in the vessel, the nature or weight of a precipitate or a target substance, and/or the contents or purpose of a process.

9. An automatic separator/extractor according to claim 1, wherein said dispensing section has; a pipette apparatus provided with a group of nozzles, and moving means capable of moving said nozzles between said vessel mounted on said conveying means and a reagent tank provided apart from said conveying means.

10. An automatic separator/extractor according to claim 1, wherein a reagent tank to be drawn from by said dispensing section, a vessel to be dispensed to, an amount to be drawn or discharged, a speed of drawing up or discharge, a timing or sequence of drawing up or discharge, the presence of insertion or removal of the pipette tips or the timing therefor, the presence or timing of washing, and/or a relationship to movement are set by the operation/control section based on the contents of the indicated process.

11. An automatic separator/extractor according to claim 1, wherein a sensor for detecting liquid level is provided in a reagent tank provided in said dispensing section, and liquid such as reagent is automatically supplied to said reagent tank in response to said sensor.

12. An automatic separator/extractor according to claim 1, wherein said liquid processing section is provided with a magnet or electromagnet such that poles thereof are positioned outside a bottom or side wall of each well of a mounted vessel.

13. An automatic separator/extractor according to either one of claim 1 and claim 12, wherein said liquid processing section is separately provided with a liquid removal section for removing liquid other than precipitate inside a vessel mounted on said conveying means, and a liquid extraction section for extracting liquid other than precipitate inside a vessel mounted on said conveying means.

14. An automatic separator/extractor according to claim 13, wherein said liquid removal section has; a liquid drawing section, one or a plurality of nozzles communicated with said liquid drawing section, and which can be inserted into said vessel,
a vertical movement mechanism for moving in a vertical direction said nozzles or vessel in order to insert said nozzles into said vessel or into each well of said vessel, and a combined incline mechanism for inclining said nozzles and vessel in combination with respect to said vertical axis, and said removal section inclines said vessel and draws in liquid from said nozzles or discharges liquid from an opening of said vessel without influencing a precipitate.

15. An automatic separator/extractor according to claim 14, wherein said liquid removal section has a position adjustment mechanism for adjusting a relative position between tips of said nozzles and inner walls of said vessels in order to contact the tips of said nozzles against the inner walls of said vessels.

16. An automatic separator/extractor according to claim 15, wherein said position adjustment mechanism has;
a cylindrical support section for supporting a plurality of nozzles arranged along a horizontal cylindrical axis direction thereof and passing through opposite cylindrical side faces to protrude downwards, so as to be rotatable about said cylindrical axis,
a flexible tube for communicating between an upper end of each of said nozzles and said liquid drawing section, and
a rotation mechanism for rotating said cylindrical support section and/or a slide mechanism for sliding said cylindrical support section in a horizontal direction.

17. An automatic separator/extractor according to claim 13 through claim 16, wherein in said discharge section, an incline angle, incline speed and/or incline timing of said combined incline mechanism, a movement direction and movement amount by said relative movement mechanism, and a drawing speed and/or a drawing timing, are set by said operation/control section based on; the contents or purpose of an indicated process, a shape or size of a nozzle or vessel, the nature of a precipitate or solution and an amount of these and/or a level of these.

18. An automatic separator/extractor according to claim 13, wherein a liquid extraction section for extracting liquid other than precipitate has an integration apparatus having drawing/discharge means for drawing and discharging fluid, and a plurality of nozzles which pass fluid thereinside by said drawing and discharging, and which are provided so as to be insertable into each well of said vessel, and said liquid extraction section draws liquid in a vessel mounted on said conveying means and discharges this to another vessel mounted on said conveying means.

19. An automatic separator/extractor according to claim 18, wherein said integration apparatus has;
a main body provided with a plurality of cylinders corresponding to a plurality of wells provided in said vessel,
a plunger section provided with a plurality of push plungers which protrude so as to be insertable into each of said cylinders,
a plurality of nozzles provided beneath said cylinders for communicating with said cylinders, and
a tip section having a plurality of pipette tips detachably fitted to said nozzles.

20. An automatic separator/extractor according to either one of claim 18 and claim 19, wherein said extraction section has; a moving means for moving said integration section between a vessel mounted on said conveying means and a vessel or a washing section for pipette tip washing provided apart from said conveying means.

21. An automatic separator/extractor according to claim 19, wherein said integration apparatus uses a link mechanism to attach or remove said tips to or from said nozzle section.

22. An automatic separator/extractor according to claim 18, wherein a drawing and discharging speed of said liquid extraction section, an insertion depth of a pipette tip in a vessel, a drawing and discharging timing, or a type of pipette to be used are set by said operation/control section based on the contents or purpose of a process, the nature or amount of liquid, precipitate, or target substance, or the shape or size of a vessel.

23. An automatic separator/extractor according to claim 3, wherein for said agitating section, individual through holes are bored in said mounting sections of a turntable for mounting each vessel of said conveying means, and at a secured position on a path at at least one location where each mounting section stops there is provided a vibration pin which passes through said through hole from the bottom side of said turntable and which is moveable back and forth and which can be vibrated, and above a vessel which is mounted on said turntable at said secured position there is provided a vessel holding section for pushing and holding said vessel which has been pushed upwards by advancing said vibration pin.

24. An automatic separator/extractor according to claim 23, wherein said vessel holding section of said agitating section is formed from a frame for contacting said vessel only at a rim on an upper face of the vessel, and the nozzles or tips of said dispensing section can be inserted from above said frame into said vessel which is beneath said frame.

25. An automatic separator/extractor according to either one of claim 22 and claim 23, wherein the vibration strength, vibration period pattern, vibration time and timing due to said agitating section are set by said operation/control section based on the nature or amount of liquid contained in a vessel, the shape or size of a vessel, and/or the contents or purpose of a process.

26. An automatic separator/extractor according to claim 1, wherein said vessel moving means moves said vessel between an incubator provided in addition to said conveying means and set at one or more temperatures, and said conveying means and/or said separator.

27. An automatic separator/extractor according to claim 26, wherein movement origin and movement destination, movement timing, or movement speed of said vessel are set by said operation/control section based for example on the contents or purpose of a process, or a liquid amount contained in a vessel.

28. A method of controlling an automatic separator/extractor having with respect to an automatic separator/extractor having:
conveying means for conveying a vessel along a closed path,
a dispensing section for dispensing a reagent or the like into said vessel,
a liquid processing section for removing and/or extracting liquid other than a precipitate inside said vessel,
a separator for performing separation with respect to contents inside said vessel,
vessel moving means for bringing in and taking out said vessel with respect to said conveying means and/or separator, and
an operation/control section for performing operation and control with respect to said conveying means, said dispensing section, said liquid processing section, said vessel moving means, and said separator,
a step for analyzing instructions from outside,
a step for bringing in and mounting a vessel on said conveying means,
a step for dispensing reagent or the like into a vessel mounted on said conveying means according to instructions,
a step for agitating contents inside said vessel mounted on said conveying means according to instructions,
a liquid processing step for removing and/or extracting liquid other than precipitate inside a vessel mounted on said conveying means according to instructions,
a step for bringing in or taking out said vessel with respect to the conveying means and/or the separator according to instructions, and
a separation step for performing separation according to instructions.

29. A method of controlling an automatic separator/extractor according to claim 28, wherein said separation step and/or liquid processing step are characterized in; a step for mounting a vessel containing a target substance which is combined with magnetic particles on a magnetic force means for generating a magnetic force and precipitating the magnetic particles according to instructions, and in moving said vessel to a position where there is no influence of magnetic force due to said magnetic force means or the like, and then with said vessel under the influence of a magnetic force due to a magnetic force means other than said magnetic force means, or in a condition where a magnetic force of said magnetic force means is received, rotating said vessel and discarding liquid other than the magnetic particles and/or extracting liquid other than magnetic particles from the vessel.

30. A liquid processing apparatus having;
a liquid drawing section, a plurality of nozzles communicated with said liquid drawing section, and which can be inserted into each well of a microplate,
a vertical movement mechanism for moving in a vertical direction said nozzles or microplate in order to insert said nozzles into each well of said microplate,
a combined incline mechanism for inclining said nozzles and microplate in combination with respect to a vertical axis, and
a relative movement mechanism for relatively moving tips of said nozzles and wells of said microplate,
and which inclines said microplate and draws in liquid from said nozzles or discharges liquid from an opening of said microplate without influencing a precipitate.

31. An integration apparatus having a tip section having;
a body provided with a plurality of cylinders corresponding to a plurality of wells provided in a microplate,
a plunger section projectingly provided with a plurality of insertion rods which are insertable in each of said cylinders,
a plurality of nozzles provided beneath each of said cylinders and communicating with said cylinders, and
a plurality of pipette tips removably fitted to said nozzles.
